# EUROPEAN PATENT APPLICATION

(11) **EP 4 426 033 A1**
(43) Date of publication of application: **04.09.2024**
(21) Application number: 21962442.6
(22) Date of filing: 28.10.2021
(51) Int. Cl.: H04W 72/04, H04W 72/12, H04W 74/04

(54) **TERMINAL AND COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); KUMAGAI, Shinya, Tokyo 100-6150 (JP); TAKAHASHI, Yuki, Tokyo 100-6150 (JP); NAGATA, Satoshi, Tokyo 100-6150 (JP)
(74) Representative: Hoffmann Eitle
(86) International application number: PCT/JP2021/039926
(87) International publication number: WO 2023/073897

(57) **Abstract**

A terminal includes: a transmission unit configured to transmit uplink information to a base station; and a control unit configured to control the uplink information to be transmitted by an upper layer via an uplink shared channel.

## Description

### FIELD OF THE INVENTION

The present invention relates to a terminal and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In NR, a technique that enables allocation of a physical uplink control channel (PUCCH) and a physical uplink shared channel (PUSCH) freely in a slot is being discussed. In addition, in NR, a technique in which uplink control information (UCI) is transmitted as a physical layer signal via PUCCH or PUSCH is being discussed continuously from LTE.

### Citation List

### Non-Patent Document

Non-Patent Document 1: 3GPP TS 38.300 V16.6.0 (2021-06)

### SUMMARY OF THE INVENTION

### TECHNICAL PROBLEM

In a case where an uplink control channel including uplink control information and an uplink shared channel are allocated freely in a slot, control related to signal collision becomes complicated, and thus, the terminal implementation is difficult, which is a problem.

The present invention has been made in view of the above points, and it is an object of the present invention to make the terminal implementation related to transmission of the uplink information easier.

### SOLUTION TO PROBLEM

According to the disclosed technique, a terminal is provided. The terminal includes: a transmission unit configured to transmit uplink information to a base station; and a control unit configured to control the uplink information to be transmitted by an upper layer via an uplink shared channel.

### ADVANTAGEOUS EFFECTS OF INVENTION

According to the disclosed technique, a technique is provided that makes the terminal implementation related to transmission of the uplink information easier.

### BRIEF DESCRIPTION OF THE DRAWINGS

[Fig. 1] is a drawing illustrating a wireless communication system related to an embodiment of the present invention.
[Fig. 2] is a drawing illustrating an example of a basic procedure in an embodiment of the present invention.
[Fig. 3] is a sequence diagram illustrating an example of a dynamic grant processing flow.
[Fig. 4] is a sequence diagram illustrating an example of a configured grant processing flow.
[Fig. 5] is a drawing for describing the control procedure related to a collision between PUCCH and PUSCH.
[Fig. 6] is a drawing for describing a method of HARQ-ACK transmission related to an option 1-1 of an embodiment 1.
[Fig. 7] is a drawing for describing a method of SR transmission related to an option 1-2 of an embodiment 1.
[Fig. 8] is a drawing for describing a method of CSI transmission related to an option 1-3 of an embodiment 1.
[Fig. 9] is a drawing for describing a method of UCI transmission related to an option 1-4 of an embodiment 1.
[Fig. 10] is a drawing for describing a method of multiplexing uplink information related to an embodiment 2.
[Fig. 11] is a drawing for describing a method of simultaneous transmission of uplink information items related to an embodiment 3.
[Fig. 12] is drawing illustrating an example of a functional structure of a base station related to an embodiment of the present invention.
[Fig. 13] is a drawing illustrating an example of a functional structure of a terminal related to an embodiment of the present invention.

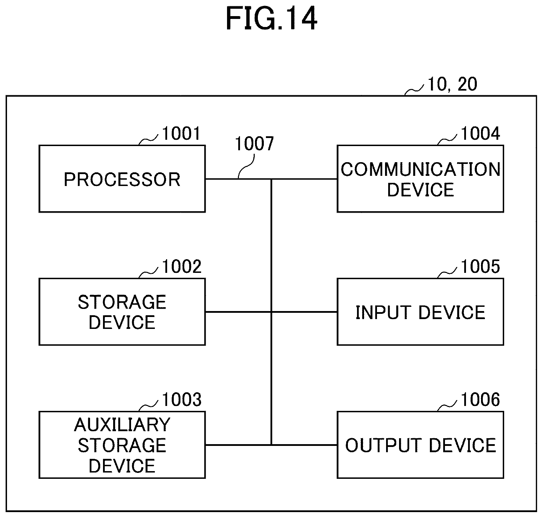

[Fig. 14] is a drawing illustrating an example of a hardware structure of the base station or the terminal related to an embodiment of the present invention.
[Fig. 15] is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

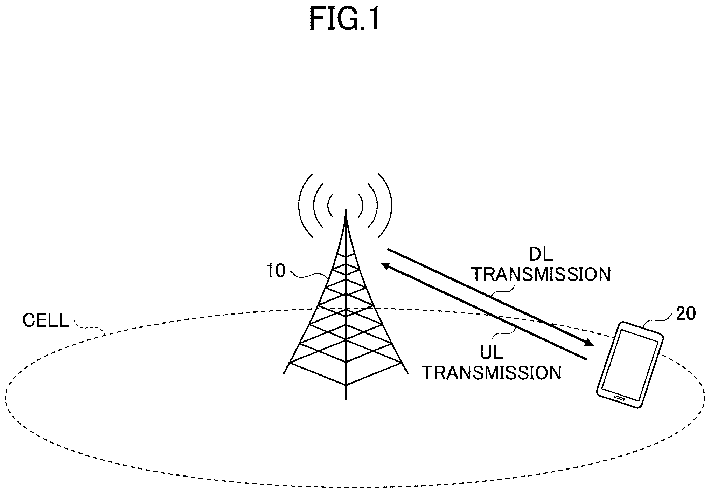

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

### (Basic operation)

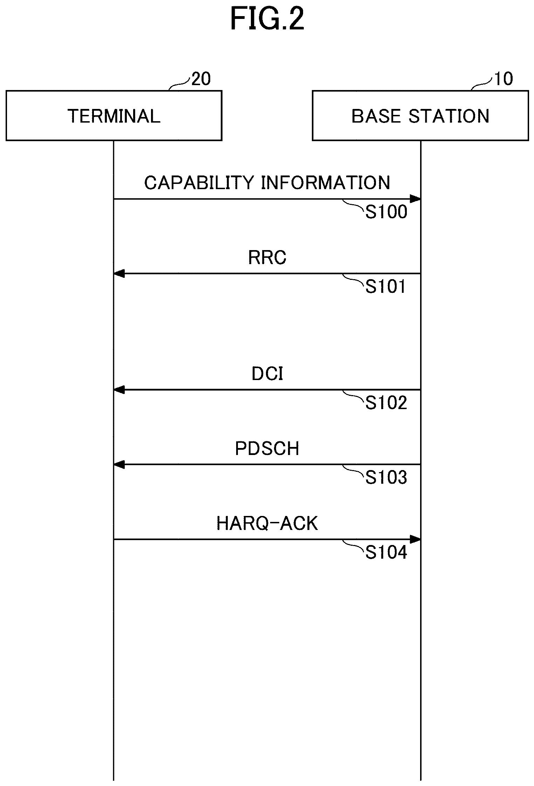

Fig. 2 is a drawing illustrating an example of a basic procedure according to an embodiment of the present invention. First, an example of a basic operation in a wireless communication system according to an embodiment of the present invention will be described with reference to Fig. 2.

In S100, the terminal 20 transmits capability information (UE capability) to the base station 10. The base station 10 can determine, for example, the content of the information to be transmitted to the terminal 20 in the following S101 and S102 based on the capability information.

In S101, the base station 10 transmits configuration information to the terminal 20 via an RRC message, and the terminal 20 receives the configuration information. The configuration information is, for example, configuration information related to a K1 set and a TDRA table as described below. Both the K1 set and the TDRA table may be indicated from the base station 10 to the terminal 20, or may be predetermined by technical specifications or the like, and the base station 10 and the terminal 20 may use the predetermined K1 set and TDRA table. In addition, the TDRA table may be referred to as time domain resource assignment configuration information.

In S102, the base station 10 transmits scheduling of one or more PDSCHs (scheduling information) to the terminal 20 via DCI, and the terminal 20 receives the DCI. In addition, the DCI also includes information related to uplink resources for transmitting HARQ-ACK information.

In S103, the terminal 20 receives the PDSCHs based on the scheduling information in the DCI and transmits the HARQ-ACK information to the base station 10 in S104. The base station 10 receives the HARQ-ACK information. It is to be noted that the PDSCH may be a PDSCH that is received without corresponding DCI, for example, a PDSCH that is received in a periodic PDSCH reception function that is referred to as semi-persistent scheduling (SPS).

Conventionally, a dynamic grant and a configured grant are specified as uplink scheduling. The dynamic grant is a procedure in which scheduling is performed in response to a scheduling request from a terminal. The configured grant is a procedure in which scheduling is performed without a scheduling request from a terminal in order to reduce an uplink delay.

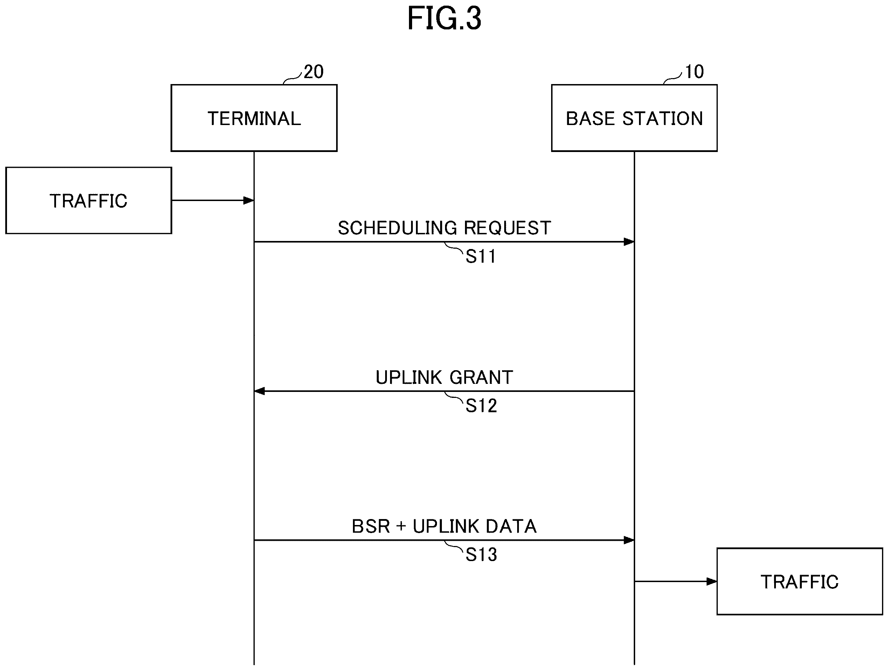

Fig. 3 is a sequence diagram illustrating an example of a dynamic grant processing flow. When the dynamic grant is configured by RRC, the terminal 20 transmits a scheduling request to a base station 10 in response to an occurrence of uplink data (step S11). The base station 10 transmits a signal indicating the uplink grant to the terminal 20 according to the received scheduling request (step S12).

The terminal 20 transmits a BSR (Buffer Status Report) and/or uplink data to the base station 10 in response to the uplink grant (step S13).

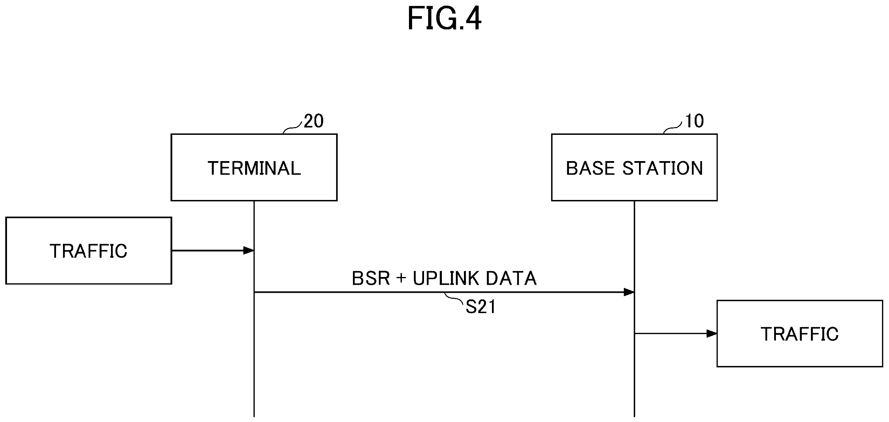

Fig. 4 is a sequence diagram illustrating an example of a CG processing flow. When CG is configured by RRC, and/or when the CG is activated by DCI, PUSCH resources are individually allocated to the terminal 20 in advance. The terminal 20 transmits a BSR and/or uplink data to the base station 10 in response to an occurrence of the uplink data without performing the scheduling request (step S21).

### (Problem of conventional technique)

Conventionally, the terminal 20 transmits UCI as a physical layer signal via PUCCH or PUSCH to the base station 10. Here, a processing procedure in a case where a PUCCH including UCI and a PUSCH collide with each other in the same slot will be described.

For example, in a case where two or more PUCCHs collide with each other in the time domain, UCIs included in those PUCCHs are multiplexed, or at least some of the UCIs are dropped, and UCIs to be transmitted are transmitted to the base station 10 via one of the PUCCHs or via another PUCCH.

For example, in a case where a PUCCH and a PUSCH collide with each other in the time domain, UCIs and/or data items (UL-SCHs) included in the PUCCH and the PUSCH are multiplexed or at least some of them are dropped, and UCI and/or data to be transmitted is(are) transmitted to the base station 10 via the PUCCH or the PUSCH.

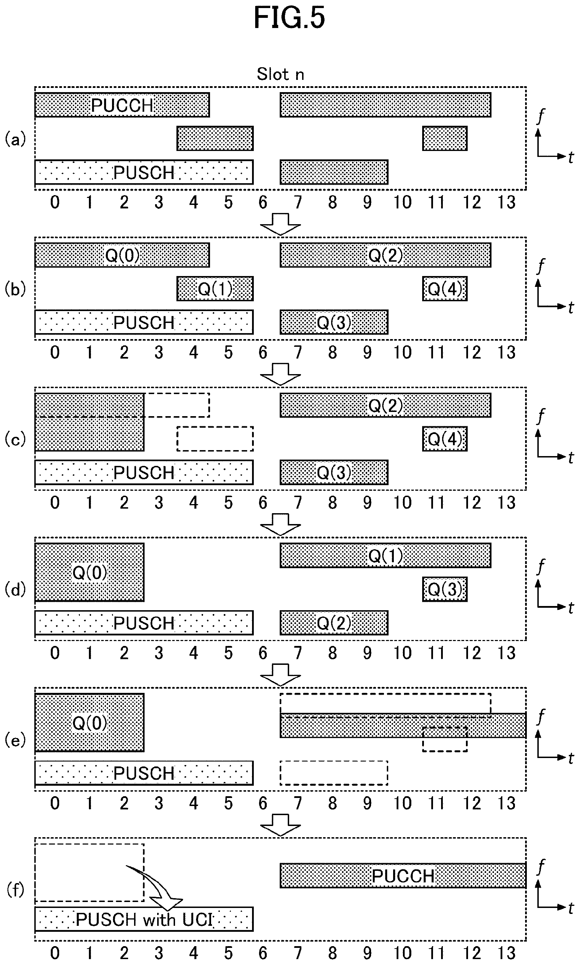

Fig. 5 is a drawing for describing the control procedure related to a collision between PUCCH and PUSCH. As illustrated in Fig. 5(a), the terminal 20 accepts the collision and allocates PUCCH and PUSCH in slot n.

Subsequently, as illustrated in Fig. 5(b), the terminal 20 assigns numbers to PUCCHs according to the following priority order.

### 1. First symbol being located earlier

### 2. Duration being longer

It is to be noted that the method of assigning numbers in a case where priorities regarding the first symbol and the duration are the same depends on the implementation of the terminal 20. In addition, as illustrated in Fig. 5(c), the terminal 20 performs UCI multiplexing or dropping with respect to the first overlapping set. Subsequently, as illustrated in Fig. 5(d), the terminal 20 re-assigns numbers to PUCCHs.

Next, as illustrated in Fig. 5(e), the terminal 20 performs UCI multiplexing or dropping with respect to the second overlapping set. Here, a PUCCH colliding with a PUCCH having the first priority in the set is included in the set.

In addition, as illustrated in Fig. 5(f), the terminal 20 transmits UCI by multiplexing the UCI into the colliding PUSCH in a case where there remains no collision between PUCCHs.

As described above, because the conventional terminal 20 transmits UCI as a physical layer signal to the base station 10 via PUCCH or PUSCH, there are an infinite number of collision patterns of PUCCH and/or PUSCH in a case where a technique that enables to allocate PUCCH or PUSCH freely in a slot is adopted, and thus, the control related to the collision between PUCCH including UCI and PUSCH becomes very complicated.

In addition, technical specifications related to ensuring the control time of the terminal 20 are also required. In addition, the complexity further increases when various numerologies, priority orders for differentiating eMBB/URLLC, and the like are involved.

It is to be noted that UCI may include, but is not limited to, the following information A) to C), and may include any control information that is transmitted from the terminal 20 to the base station 10.
A) HARQ-ACK: Successful or unsuccessful detection report with respect to downlink data reception or control information reception (for example, SPS release indication reception or SCell dormancy indication reception)
B) SR: Request signal to the base station 10 related to the uplink data transmission or control information transmission (for example, transmission of information related to beam failure recovery in SCell)
C) CSI: Information report related to the downlink channel state (for example, channel quality indicator, rank indicator, precoding matrix indicator, layer 1 reference signal received power)

### (Overview of embodiment)

In an embodiment of the present invention, in order to solve the above-described conventional problem, a method of easier implementation of control related to UCI transmission will be described. Accordingly, a low-cost terminal, a terminal with reduced power consumption, and the like, will be implemented.

Hereinafter, embodiments from an embodiment 1 to an embodiment 3 will be described as specific embodiments of the present invention.

### (Embodiment 1)

In an embodiment 1, an example will be described in which the terminal 20 transmits UCI by using a lower layer or an upper layer via PUSCH. Here, the upper layer is a layer located higher than the physical layer, and includes, for example, a MAC layer, a PDCP layer, and an RLC layer. In addition, the lower layer is a layer located lower than the upper layer, and may mean the physical layer.

In other words, the terminal 20 according to an embodiment of the present invention is different from the conventional terminal with respect to the point of always transmitting UCI via PUSCH alone without using PUCCH and with respect to the point of transmitting UCI by using the upper layer.

### <Option 1-1>

The terminal 20 may transmit HARQ-ACK via PUSCH by using a lower layer or an upper layer.

The terminal 20 may determine a PUSCH used for transmission of HARQ-ACK corresponding to the scheduled PDSCH, based on PUSCH allocation information included in the downlink scheduling signal (DCI) transmitted from the base station 10.

Here, the cell used for transmitting the PUSCH by the terminal 20 may be limited to a predetermined cell (for example, SpCell, the HARQ feedback granted cell, or the like), or the PUSCH may be transmitted by using any cell.

The cell used for transmitting the PUSCH may be configured or indicated by the base station 10. In addition, the PUSCH may be indicated by one of the following.

In the first method, the base station 10 indicates the time resource and the frequency resource by using corresponding fields. This is the same indication method as that of the PUSCH scheduling specified in NR.

In the second method, the base station 10 configures multiple PUSCH resources in advance, and each time indicates which of the configured multiple PUSCH resources is to be used. This is the same indication method as that of the PUCCH indication specified in NR.

The first method is more flexible than the second method. However, the second method is simpler than the first method in terms of indicating method, and requires a smaller amount of indication information.

The terminal 20 may receive an indication indicating whether or not transmission of a signal other than HARQ-ACK (for example, MAC-CE including data (MAC-PDU) or another information) is enabled via the PUSCH from the base station 10. It is to be noted that the MAC-PDU in an embodiment of the present invention may be replaced with MAC SDU.

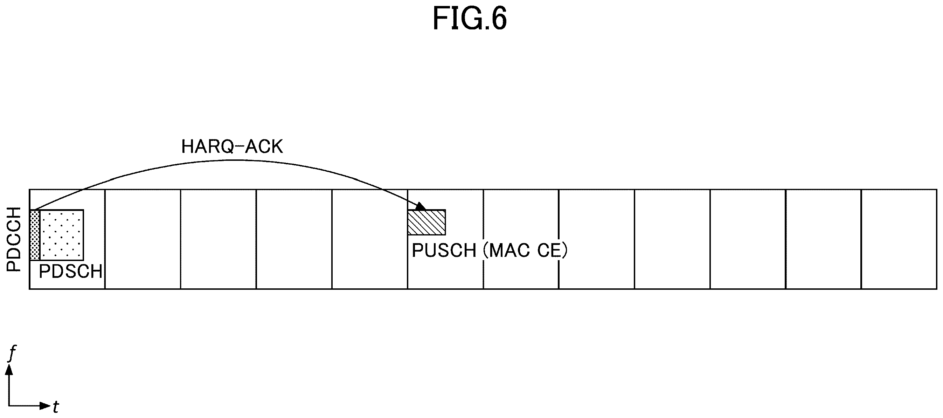

Fig. 6 is a drawing for describing a method of HARQ-ACK transmission related to an option 1-1 of an embodiment 1. As illustrated in Fig. 6, the terminal 20 may generate HARQ-ACK based on the PDSCH decoding result to be transmitted as an upper layer signal. The upper layer signal may be MAC-CE, for example.

In addition, the base station 10 may indicate information related to the multiplexing of HARQ-ACK (generation of HARQ-ACK codebook) to the terminal 20 by using each DCI. For example, the base station 10 may indicate which PUSCH resource is to be a multiplexing destination, or may indicate which multiplexing group is to be a multiplexing destination. It is to be noted that the method of indicating, by the base station 10, which multiplexing group is to be a multiplexing destination will be described in an embodiment 2.

In addition, the terminal 20 may perform HARQ-ACK transmission via the same PUSCH, the same time unit (for example, slot) being indicated with respect to the HARQ-ACK transmission.

In addition, the terminal 20 may transmit HARQ-ACK via a PUSCH resource that is indicated by the last DCI with respect to the time or frequency domain among the HARQ-ACKs to be multiplexed.

According to the option 1-1, the multiplexing processing due to the overlapping of physical channels used for HARQ-ACK becomes unnecessary, and the physical layer processing can be the same processing as that of the PUSCH transmission related to the data transmission. According to the above operation, the configuration of the terminal 20 can be simple.

### <Option 1-2>

The terminal 20 may transmit a scheduling request (SR) via PUSCH by using a lower layer or an upper layer.

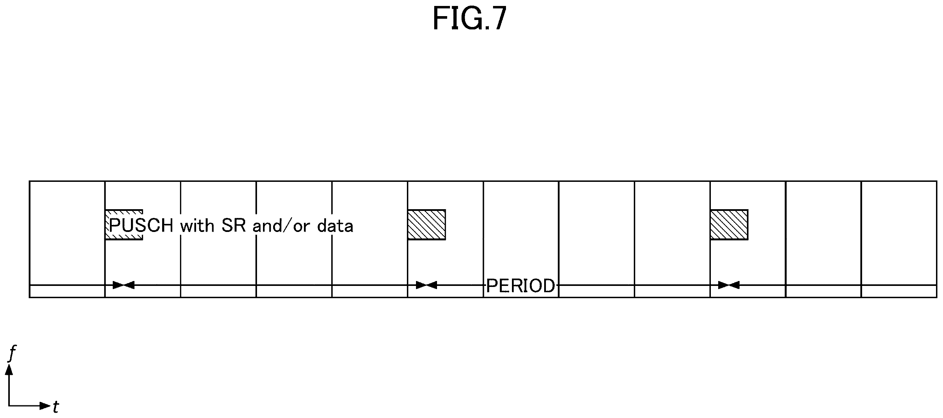

Fig. 7 is a drawing for describing a method of SR transmission related to an option 1-2 of an embodiment 1. The resource for SR transmission may be a configured grant PUSCH configured to the terminal 20 by the base station 10. In other words, the base station 10 may configure periodically scheduled PUSCH resources.

The terminal 20 may transmit a signal other than SR (data (MAC-PDU), MAC-CE including other information, BSR, or the like) in addition to the SR, or in place of the SR.

The terminal 20 is not required to assume that retransmission of PUSCH transmission related to SR will be indicated by DCI after transmission of the SR. In other words, the HARQ process number for the PUSCH transmission including SR is not required to be assigned.

The SR transmission by the terminal 20 may be enabled by the configuration by the base station 10 via RRC, etc. In addition, the SR transmission may be enabled by the indication by the base station 10 via the activation DCI, MAC-CE, etc.

MCS (Modulation Coding Scheme) for the SR transmission by the terminal 20 may be configured by the base station 10, the terminal 20 may determine the MCS by using a predetermined method, or the terminal 20 may indicate the MCS to the base station 10 by using a predetermined method (for example, RS (Reference Signal) sequence, or the like).

In addition, the configured grant PUSCH may be configured by the base station 10 as a resource for BSR transmission by the terminal 20. In other words, there may be no resource for SR transmission and there may be no definition of SR itself, and, when requesting the PUSCH resource, the operation may start with the BSR transmission.

The terminal 20 may transmit a signal other than BSR (data (MAC-PDU), MAC-CE including other information, or the like) in addition to the BSR, or in place of the BSR.

The BSR transmission by the terminal 20 may be enabled by the configuration by the base station 10 via RRC, etc. In addition, the BSR transmission may be enabled by the indication by the base station 10 via the activation DCI, MAC-CE, etc.

MCS (Modulation Coding Scheme) for the BSR transmission by the terminal 20 may be configured by the base station 10, the terminal 20 may determine the MCS by using a predetermined method, or the terminal 20 may indicate the MCS to the base station 10 by using a predetermined method (for example, RS (Reference Signal) sequence, or the like).

According to the option 1-2, the multiplexing processing due to the overlapping of physical channels used for SR or BSR becomes unnecessary, and the physical layer processing can be the same processing as that of the PUSCH transmission related to the data transmission. According to the above operation, the configuration of the terminal 20 can be simple.

### <Option 1-3>

The terminal 20 may transmit CSI (Channel Status Information) via PUSCH by using a lower layer or an upper layer.

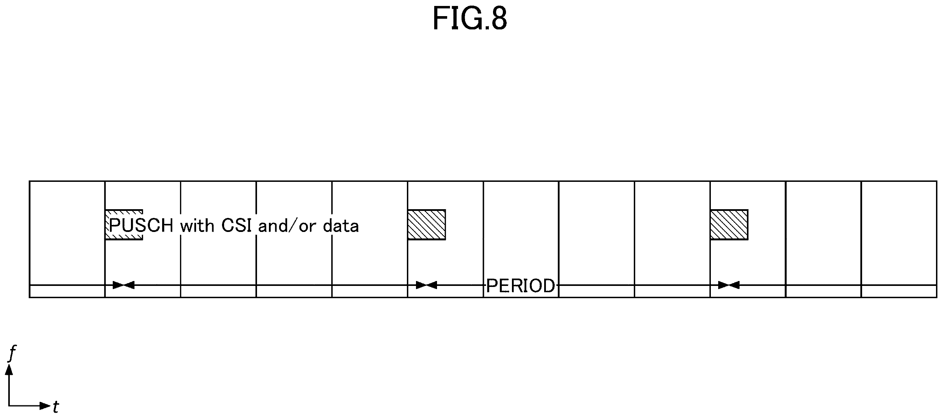

Fig. 8 is a drawing for describing a method of CSI transmission related to an option 1-3 of an embodiment 1. The configured grant PUSCH may be configured by the base station 10 as a resource for CSI transmission by the terminal 20. In other words, the base station 10 may configure periodically scheduled PUSCH resources.

The terminal 20 may transmit a signal other than CSI (data (MAC-PDU), MAC-CE including other information, or BSR) in addition to the CSI, or in place of the CSI.

The terminal 20 is not required to assume that retransmission of PUSCH transmission related to CSI will be indicated by DCI after transmission of the CSI. In other words, the HARQ process number for the PUSCH transmission including CSI is not required to be assigned.

The CSI transmission by the terminal 20 may be enabled by the configuration by the base station 10 via RRC, etc. In addition, the CSI transmission may be enabled by the indication by the base station 10 via the activation DCI, MAC-CE, etc.

MCS (Modulation Coding Scheme) for the CSI transmission by the terminal 20 may be configured by the base station 10, the terminal 20 may determine the MCS by using a predetermined method, or the terminal 20 may indicate the MCS to the base station 10 by using a predetermined method (for example, RS (Reference Signal) sequence, or the like).

In addition, the terminal 20 may transmit CSI as an upper layer signal (for example, MAC-CE).

In addition, the terminal 20 may transmit an aperiodic CSI report to the base station 10, based on an indication via an upper layer (MAC-CE, or the like) or a lower layer (DCI, or the like) from the base station 10.

According to the option 1-3, the multiplexing processing due to the overlapping of physical channels used for CSI becomes unnecessary, and the physical layer processing can be the same processing as that of the PUSCH transmission related to the data transmission. According to the above-described operation, the configuration of the terminal 20 can be simple.

### <Option 1-4>

The terminal 20 may transmit various types of UCI (HARQ-ACK, SR, CSI, or the like) via PUSCH by using a lower layer or an upper layer.

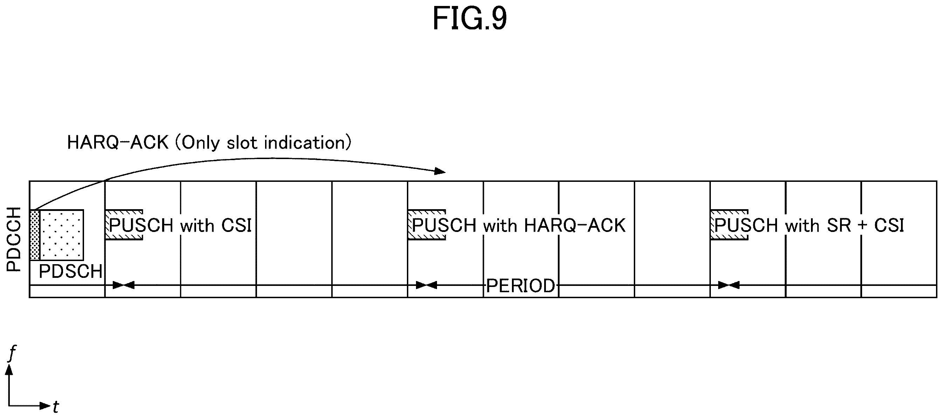

Fig. 9 is a drawing for describing a method of UCI transmission related to an option 1-4 of an embodiment 1. The configured grant PUSCH may be configured by the base station 10 as a resource that can be used for any UCI transmission by the terminal 20. In other words, the base station 10 may configure periodically scheduled PUSCH resources that can be used for any UCI transmission (accordingly, resources whose use is not indicated as/limited to a single type of UCI transmission).

The terminal 20 may transmit any signal among HARQ-ACK, SR, and CSI via any configured resource. In other words, the terminal 20 may perform configured grant PUSCH transmission regardless of the channel collision.

At least one of the predetermined time (for example, slot) or cell for the HARQ-ACK transmission corresponding to the scheduled PDSCH is indicated from the base station 10 to the terminal 20. In addition, the configured grant PUSCH transmission with respect to at least one of the indicated time or cell may be used for the HARQ-ACK transmission by the terminal 20.

In other words, the base station 10 is not required to explicitly indicate the details of definition of the PUSCH resource (for example, symbol, PRB (Physical Resource Block), or the like) via DCI.

In a case where uplink data occurs and the configured grant PUSCH transmission is not sufficient for transmission of the data, the terminal 20 may use the configured grant PUSCH for SR transmission.

The terminal 20 may obtain CSI by performing measurement periodically and may transmit CSI to the base station 10 in a case where the difference between the previously transmitted CSI and the obtained CSI exceeds a predetermined threshold value. In other words, the terminal 20 is not required to transmit CSI in a case where the difference does not exceed the predetermined threshold value.

Alternatively, the terminal 20 may obtain CSI by performing measurement periodically and may transmit CSI to the base station 10 in a case where the time that has elapsed from the timing of the previous CSI transmission exceeds a predetermined threshold value. In other words, the terminal 20 is not required to transmit CSI in a case where the elapsed time does not exceed the predetermined threshold value.

Alternatively, the terminal 20 may transmit CSI based on a decoding result of PDSCH. In other words, the terminal 20 is not required to transmit CSI in a case where the state of radio wave reception is not good.

In a case where multiple UCI transmissions occur, the terminal 20 may transmit all of the UCIs if there are sufficient amount of resources for transmitting all of the information, and, otherwise, may select and transmit some of the UCIs.

In this case, the priority order for the terminal 20 to select UCIs may be specified in advance. For example, the priority order may be HARQ-ACK>SR>CSI, or may be SR>HARQ-ACK>CSI.

The terminal 20 may transmit the un-transmitted UCI via another PUSCH (referred to as PUSCH Y). In this case, the terminal 20 may transmit information indicating that the un-transmitted UCI will be transmitted via PUSCH Y and/or information related to the resource via PUSCH including the selected UCIs (referred to as PUSCH X). Alternatively, the terminal 20 may transmit information indicating the UCI that has not been transmitted via PUSCH X or information related to the PUSCH X resource via PUSCH Y including the un-transmitted UCI.

The terminal 20 may transmit a signal other than UCI (data (MAC-PDU), MAC-CE including other information, or BSR) in addition to the UCI, or in place of the UCI.

The terminal 20 is not required to assume that retransmission of PUSCH transmission related to UCI will be indicated by DCI after transmission of the UCI. In other words, the HARQ process number for the PUSCH transmission including UCI is not required to be assigned.

MCS (Modulation Coding Scheme) for the UCI transmission by the terminal 20 may be configured by the base station 10, the terminal 20 may determine the MCS by using a predetermined method, or the terminal 20 may indicate the MCS to the base station 10 by using a predetermined method (for example, RS (Reference Signal) sequence, or the like).

According to the option 1-4, the terminal 20 can prepare a channel common to any one of UCIs and can use the channel as a basic operation, thereby, the terminal 20 can avoid the complicated operation related to the multiplexing.

### (Embodiment 2)

In this embodiment, a method of multiplexing uplink information by the terminal 20 in response to receiving an indication from the base station 10 indicating which multiplexing group is to be a multiplexing destination.

The terminal 20 may perform multiplexing of UCI and at least one of uplink information items other than UCI (data (MAC-PDU), MAC-CE including another information, or the like), based on a multiplexing group indication. The multiplexing group indication is an indication received from the base station 10 and indicates which multiplexing is a multiplexing destination.

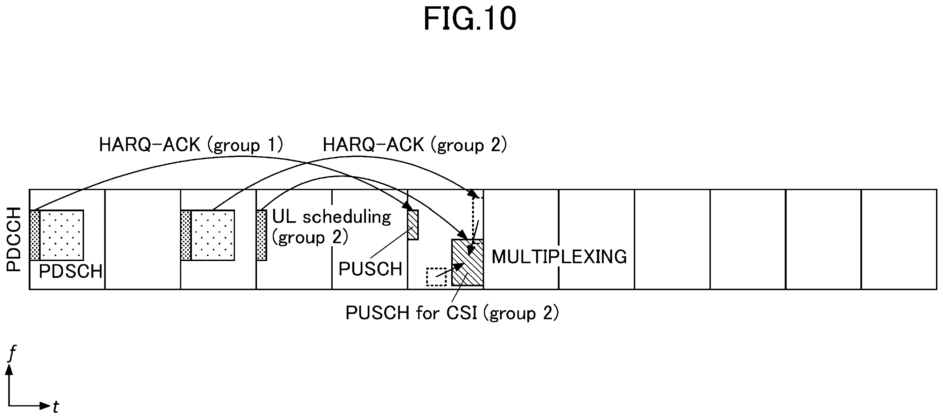

Fig. 10 is a drawing for describing a method of multiplexing uplink information related to an embodiment 2. The terminal 20 multiplexes the uplink information items that are scheduled to at least one of a predetermined time unit (for example, slot) or a predetermined frequency unit (for example, cell) into the same PUSCH, based on the multiplexing group indication. In other words, the terminal 20 may multiplex and transmit PUSCHs regardless of the channel collision.

The multiplexing group indication specifically includes a group identifier such as a group 1, a group 2, etc. In addition, the terminal 20 multiplexes information items to which the same group is indicated into the same PUSCH. Here, as illustrated in Fig. 10, the terminal 20 may multiplex information items to which the same group is indicated regardless of presence or absence of an overlap.

### <Option 2-0: Multiplexing group>

Regarding the multiplexing groups, the maximum number of groups may be configured to the terminal 20 by the base station 10. In addition, the base station 10 and the terminal 20 may determine the DCI field size based on the configuration. In addition, in the DCI used for the initial access, the number of multiplexing groups may be a predetermined number of groups (for example, 1).

The terminal 20 is not required to assume that PUSCHs related to different multiplexing groups overlap with each other in the time domain in the same cell. In other words, the base station 10 indicates the multiplexing groups in a manner in which PUSCHs related to different multiplexing groups do not overlap with each other in the time domain in the same cell.

### <Option 2-1: HARQ-ACK>

The base station 10 may indicate the multiplexing group to the terminal 20 via each of the PDSCH scheduling DCIs, and the terminal 20 may receive the indication. The terminal 20 may generate a HARQ-ACK codebook for each multiplexing group.

### <Option 2-2: SR>

The base station 10 may configure SR multiplexing group by using the upper layer configuration, and the terminal 20 may receive the configuration. Alternatively, which multiplexing group is to be a group for SR may be defined in the technical specification (for example, group 0).

### <Option 2-3: CSI>

The base station 10 may configure CSI multiplexing group by using the upper layer configuration, and the terminal 20 may receive the configuration. Alternatively, which multiplexing group is to be a group for CSI may be defined in the technical specification (for example, group 0). In addition, the base station 10 may indicate the multiplexing group by using the CSI requesting DCI and the terminal 20 may receive the indication.

In addition, different methods may be used for the method of multiplexing group configuration or indication depending on the CSI report types (aperiodic, semi-persistent, periodic, and the like).

### <Option 2-4: UL-SCH>

The base station 10 may configure the UL-SCH (uplink shared channel) multiplexing group by using the upper layer configuration, and the terminal 20 may receive the configuration. Alternatively, which multiplexing group is to be a group for UL-SCH may be defined in the technical specification (for example, group 0). The configuration and the definition may be configured or defined for a predetermined unit. For example, the configuration and the definition may be configured or defined for each HARQ process number, for each information indicating the priority, or for each information related to the PUSCH resource. In addition, the terminal 20 may receive an indication of the multiplexing group via a UL grant.

In addition, different methods of configuring or indicating the multiplexing group may be used between the dynamic grant PUSCH and the configured grant PUSCH.

### <Option 2-5>

In a case where there are multiple DCIs corresponding to the multiplexed information items, the DCI located last in the time or frequency domain may be used for indicating the PUSCH resource used for multiplexing the information items to be transmitted by the terminal 20 to the base station 10.

### <Option 2-6>

In a case where there is no DCI corresponding to the multiplexed information items, the terminal 20 may transmit the multiplexed information items to the base station 10 by using a predetermined PUSCH resource. At this time, the terminal 20 may select a PUSCH resource according to a predetermined priority order. The priority order may be, for example, the configured grant PUSCH for UL-SCH > PUSCH for CSI > PUSCH for SR.

In this embodiment, PUSCH may be replaced with PUCCH. The terminal 20 may multiplex and transmit uplink information items regardless of the channel collision also in a case of PUCCH.

This embodiment may be combined with an embodiment 1.

The terminal 20 related to this embodiment can avoid complicated processing related to multiplexing performed by the terminal because the base station 10 explicitly performs multiplexing indication.

### (Embodiment 3)

In this embodiment, an example will be described in which the terminal 20 transmits multiple uplink information items simultaneously via the same time resources.

The terminal 20 may transmit "multiple PUCCHs" or "PUCCH and PUSCH" simultaneously via the same time resources.

### <Option 3-1>

The terminal 20 may perform simultaneous transmission of "multiple PUCCHs" or "PUCCH and PUSCH" by using frequency units (for example, CCs or cells, hereinafter, referred to as cells). In other words, the terminal 20 performs simultaneous transmission without performing multiplexing at the time of collision in the time domain.

The terminal 20 is not required to perform multiplexing with SR or CSI by collecting HARQ-ACKs together in each cell (generating a HARQ-ACK codebook for each cell). In other words, the terminal 20 may transmit at least some of four items of the PUCCH for HARQ-ACK, PUCCH for SR, PUCCH for CSI, and PUSCH simultaneously in a cell.

### <Option 3-2>

The terminal 20 may perform simultaneous transmission of "multiple PUCCHs" or "PUCCH and PUSCH" by using multiple cells.

The terminal 20 is not required to perform simultaneous transmission in each cell. Accordingly, the terminal 20 performs multiplexing in each cell at the time of collision in the time domain. Alternatively, for example, the multiplexing based on the multiplexing group of the embodiment 2 may be performed in each cell regardless of presence or absence of collision in the time domain. Here, "each cell" may be replaced with "cells of the same numerology".

The terminal 20 may be able to perform PUCCH transmission in all cells. The terminal 20 generates a HARQ-ACK codebook for each cell. PUCCHs for SR and CSI transmission can be configured for each cell.

The base station 10 may schedule PUCCH in the same cell by using the PDSCH allocating DCI. The terminal 20 may transmit HARQ-ACK corresponding to the above-described PDSCH by using the cell related to the above-described PUCCH. The above-described operations may be performed in any cell.

In addition, the base station 10 may indicate the PUCCH scheduling cell by using the PDSCH allocating DCI. The terminal 20 may transmit HARQ-ACK corresponding to the above-described PDSCH by using the cell related to the above-described PUCCH. Here, an indication may be performed regarding whether the transmission is to be performed by using a predetermined cell (for example, SpCell or PUCCH SCell) or by using the same cell.

### <Option 3-3>

The terminal 20 may assume that the base station 10 configures or indicates which of the option 3-1 or the option 3-2 is to be performed. Here, information indicating the configuration or indication may be explicit information or may be implicit information, that is, another information indirectly indicating the configuration or indication.

According to this embodiment, the multiplexing operation of the terminal 20 accompanied with a collision can be minimized and the configuration of the terminal 20 can be simple.

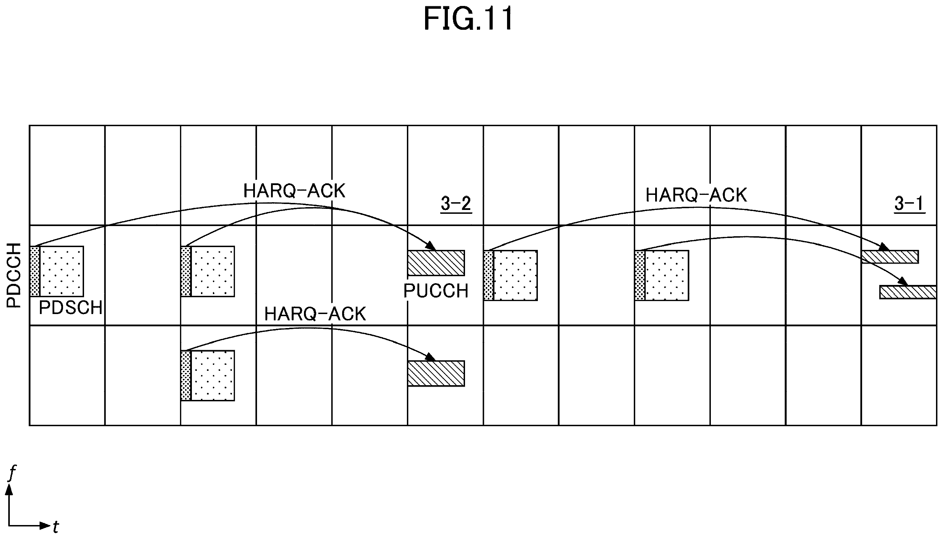

Fig. 11 is a drawing for describing a method of simultaneous transmission of uplink information items related to an embodiment 3. According to the option 3-1, even in a case where multiple HARQ-ACKs collide with each other in the time domain, simultaneous transmission is performed in the same cell. According to the option 3-2, in a case where multiple HARQ-ACKs collide with each other in the time domain, multiplexing is performed for the same cell and the simultaneous transmission without multiplexing is performed for a case of using several cells.

The terminal 20 may indicate capability information indicating whether or not to support an operation of each of the above-described embodiments to the base station 10. The base station 10 may perform configuration or indication for the terminal 20 based on the indicated capability information.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

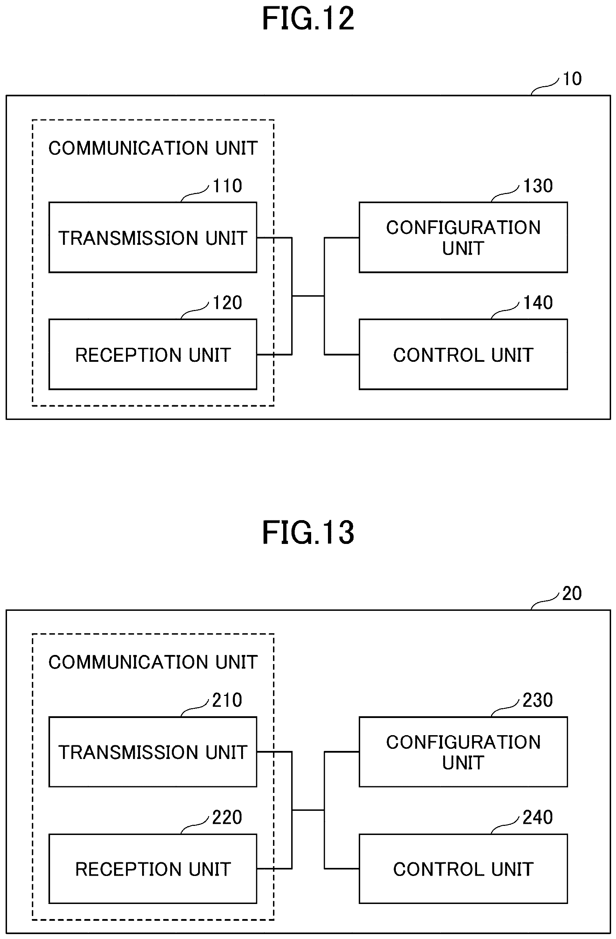

Fig. 12 is a drawing illustrating an example of a functional configuration of the base station. As shown in Fig. 12, the base station 10 includes a transmission unit 110, a reception unit 120, a configuration unit 130, and a control unit 140. The functional configuration illustrated in Fig. 12 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, re spectively.

### <Terminal 20>

Fig. 13 is a drawing illustrating an example of a functional configuration of the terminal. As shown in Fig. 13, the terminal 20 includes a transmission unit 210, a reception unit 220, a configuration unit 230, and a control unit 240. The functional configuration illustrated in Fig. 13 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

A terminal according to an embodiment of the present invention may be configured as a terminal described in each item below. In addition, a communication method below may be performed.

### <Configuration related to an embodiment of the present invention>

### (First item)

A terminal including:
a transmission unit configured to transmit uplink information to a base station; and
a control unit configured to control the uplink information to be transmitted by an upper layer via an uplink shared channel.

### (Second item)

The terminal as described in the first item, wherein
the uplink information is at least one of HARQ response information corresponding to data received from the base station, a scheduling request to the base station or a buffer status report, or channel status information.

### (Third item)

The terminal as described in the second item, wherein
the terminal further comprising: a reception unit configured to receive information indicating multiplexing of HARQ response information items from the base station, wherein
the control unit multiplexes the HARQ response information items based on the information indicating the multiplexing.

### (Fourth item)

The terminal as claimed in the second item or third item, wherein
the uplink information is at least one of: the scheduling request to the base station or the buffer status report; or the channel status information, and
the control unit controls the uplink information to be transmitted via a resource of the uplink shared channel that is periodically scheduled.

### (Fifth item)

A communication method performed by a terminal, the communication method including:
transmitting uplink information to a base station; and
controlling the uplink information to be transmitted by an upper layer via an uplink shared channel.

According to any one of the above-described configurations, a technique is provided that makes the terminal implementation related to transmission of the uplink information easier. According to the second item, the terminal implementation related to transmission of at least one of HARQ response information, a scheduling request or a buffer status report, or channel status information can be made easier. According to the third item, the terminal implementation related to multiplexing of HARQ response information items can be made easier. According to the fourth item, uplink information can be transmitted by using the uplink shared channel resources that are scheduled periodically.

### (Hardware structure)

In the above block diagrams used for describing an embodiment of the present invention (Fig. 12 and Fig. 13), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

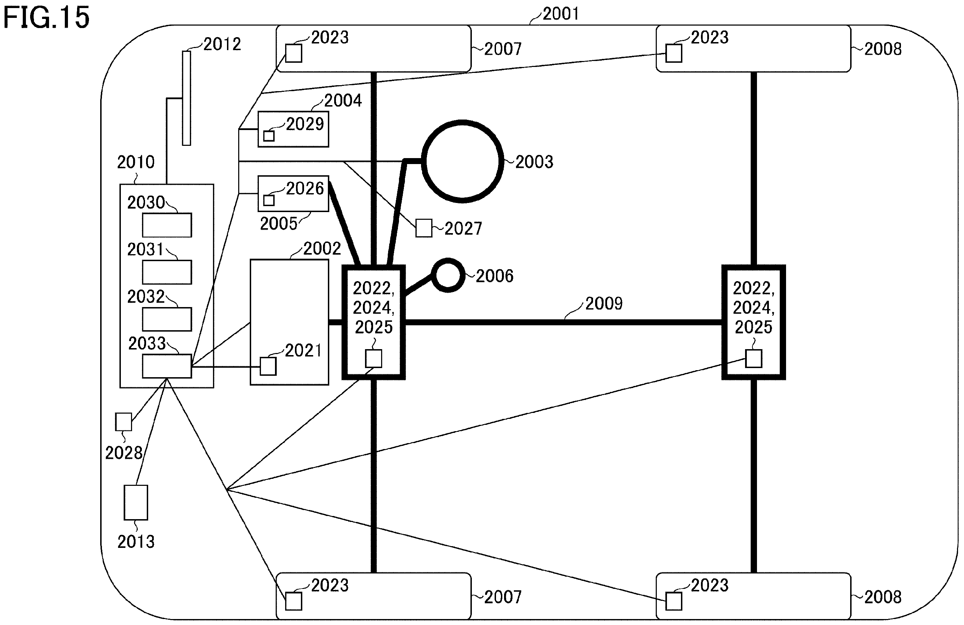

For example, the base station 10, the terminal 20, etc., according to an embodiment of the present disclosure may function as a computer for processing the radio communication method of the present disclosure. Fig. 15 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 12 may be realized by control programs that are stored in the storage device 1002 and are executed by the processor 1001. Further, for example, the control unit 240 of the terminal 20 illustrated in Fig. 13 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

Fig. 16 shows an example of a configuration of a vehicle 2001. As shown in Fig. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a transmission unit configured to transmit uplink information to a base station; and
a control unit configured to control the uplink information to be transmitted by an upper layer via an uplink shared channel.

2. The terminal as claimed in claim 1, wherein
the uplink information is at least one of HARQ response information corresponding to data received from the base station, a scheduling request to the base station or a buffer status report, or channel status information.

3. The terminal as claimed in claim 2,
the terminal further comprising: a reception unit configured to receive information indicating multiplexing of HARQ response information items from the base station, wherein
the control unit multiplexes the HARQ response information items based on the information indicating the multiplexing.

4. The terminal as claimed in claim 2 or 3, wherein
the uplink information is at least one of: the scheduling request to the base station or the buffer status report; or the channel status information, and
the control unit controls the uplink information to be transmitted via a resource of the uplink shared channel that is periodically scheduled.

5. A communication method performed by a terminal, the communication method comprising:
transmitting uplink information to a base station; and
controlling the uplink information to be transmitted by an upper layer via an uplink shared channel.
